# EUROPÄISCHE PATENTSCHRIFT

(11) **EP 3 152 644 B1**
(45) Veröffentlichungstag und Bekanntmachung des Hinweises auf die Patenterteilung: **13.03.2024**
(21) Anmeldenummer: 15742174.4
(22) Anmeldetag: 20.04.2015
(51) Int. Cl.: G06F 3/0481

(54) **BILDSCHIRM, SONAR UND WASSERFAHRZEUG**
DISPLAY SCREEN, SONAR, AND WATER CRAFT
ÉCRAN, SONAR ET ENGIN NAUTIQUE

(30) Priorität: 05.06.2014 DE 102014107966
(43) Veröffentlichungstag der Anmeldung: 12.04.2017
(73) Patentinhaber: ATLAS ELEKTRONIK GmbH, 28309 Bremen (DE)
(72) Erfinder: GRÖSCHL, Martin, 27801 Dötlingen (DE)
(74) Vertreter: thyssenkrupp Intellectual Property GmbH
(86) Internationale Anmeldenummer: PCT/DE2015/100166
(87) Internationale Veröffentlichungsnummer: WO 2015/185034

(56) Entgegenhaltungen:
- US-A- 5 910 801
- N/a: "778c HD and 778c HD XD Operations Manual", , 2 January 2011 (2011-01-02), XP055663991, Humminbird web site Retrieved from the Internet: URL:https://www.humminbird.com/sites/hummi nbird_site/files/hum_productmanual_ops_778 chd_531830e.pdf [retrieved on 2020-01-31]
- N/a: "GPSMAP 700 series owner's manual", , 22 March 2010 (2010-03-22), XP055664005, Garmin's web site Retrieved from the Internet: URL:http://static.garmin.com/pumac/GPSMAP_ 700_Series_OM_EN.pdf [retrieved on 2020-01-31]

## Beschreibung

Die Erfindung betrifft ein Sonar aufweisend einen Bildschirm, insbesondere Touchscreen, mit einem zugeordneten Rechner, einer Darstellungsachse und einer Bereichsachse mit einer Bereichsuntergrenze, einer Bereichsobergrenze und einem ersten Zoombereich mit einer ersten Zoomobergrenze und einer ersten Zoomuntergrenze, wobei die Bereichsachse und die Darstellungsachse einen eingeschlossenen Anzeigebereich bilden und insbesondere orthogonal zueinander angeordnet sind und insbesondere ein funktionaler Zusammenhang im Anzeigebereich darstellbar ist, sowie ein Wasserfahrzeug.

Bei einem Echolot wird die Tiefeninformation unterhalb eines Wasserfahrzeuges bestimmt. Die Tiefeninformation wird mittels ausgesandter Schallwellen gewonnen, welche von Objekten reflektiert und deren zugehörige Laufzeit ermittelt werden. Dabei können unterschiedliche Bereiche unterhalb des Schiffes interessant sein.

So kann sich relativ nah an der Oberfläche ein Algenteppich befinden, es kann in einer dezidierten Tiefe nach Fischschwärmen Ausschau gehalten werden oder es kann ein Bodenprofil untersucht werden. Insbesondere wenn ein bestimmter Bereich interessant wurde, musste bisher die Achse, welche die Tiefeninformation widerspiegelte, in der Ober- und Untergrenze angepasst werden. Dies erfolgte beispielsweise durch das Anklicken mit einer Maus und dem Verschieben der jeweiligen Grenze oder mit der Eingabe dezidierter Werte in ein Eingabefeld.

Sollte nun in kurzer Zeit ein anderer Bereich überwacht werden, beispielsweise das Bodenprofil, so mussten erst wieder händisch die Grenzen verändert werden, so dass der Boden mit umfasst war. Dieser Aufwand ist sehr hoch und kostet einiges an Zeit, da jeweils eine händische Eingabe erfolgen musste.

Die US 5,910,801 A offenbart einen Zoomsteuermechanismus mit einer Kontextanzeige zum Anzeigen einer Darstellung eines Datensatzes, einer Zoomanzeige zum Anzeigen einer Darstellung eines Zoomintervalls innerhalb des Datensatzes, einen Kontextindikator, der einen Startpunkt oder einen Endpunkt eines Zoomintervalls in der Kontextanzeige anzeigt und einen Zoomindikator, der dem Kontextindikator entspricht, der den Startpunkt oder Endpunkt des Zoomintervalls innerhalb der Zoomanzeige anzeigt. Das Zoom-Intervall wird entsprechend der Benutzerauswahl und der Bewegung des Kontextindikators und des Zoomindikators an eine neue Stelle innerhalb der Kontextanzeige bzw. der Zoomanzeige aktualisiert.

"778c HD and 778c HD XD Operations Manual", 2. Januar 2011 (2011-01-02), XP055663991, offenbart ein "Fish-Finding" Sonar mit einem Display.

"GPSMAP 700 series owner`s manual", 22. März 2010 (2010-03-22), XP055664005, Garmin's web site, offenbart ein GPS-Gerät mit Display.

Die genannten Druckschriften offenbaren jedoch alle eine geteilte Anzeige der Übersichtsdarstellung und der Zoomdarstellung. Nicht offenbart ist jeweils, dass die Übersichtsdarstellung und die Zoomdarstellung in dem gleichen Anzeigebereich des Bildschirms angezeigt werden.

Aufgabe der Erfindung ist es den Stand der Technik zu verbessern.

Gelöst wird die Aufgabe durch ein Sonar aufweisend einen Bildschirm, insbesondere Touchscreen, mit einem zugeordneten Rechner, wobei der Rechner Eingabemittel umfasst, wobei der Bildschirm ein Touchscreen ist, wobei der Rechner eingerichtet ist, Berührungen auf dem Touchscreen zur Eingabe in den Rechner zu verwenden, wobei der Rechner eingerichtet ist, über eine Kamera aufgefasste Gesten zur Eingabe in den Rechner zu verwenden, wobei der Bildschirm eine Anzeige vermittelt und wobei der zugeordnete Rechner dem Bildschirm die darzustellenden Informationen übergibt, wobei der Bildschirm eine Anzeige vermittelt und wobei der zugeordnete Rechner dem Bildschirm die darzustellenden Informationen übergibt, wobei eine Darstellungsachse und eine Bereichsachse auf dem Bildschirm darstellbar sind, wobei die Bereichsachse eine Bereichsuntergrenze, eine Bereichsobergrenze und einen ersten Zoombereich mit einer ersten Zoomobergrenze und einer ersten Zoomuntergrenze umfasst, wobei die Bereichsachse und die Darstellungsachse einen eingeschlossenen Anzeigebereich bilden und insbesondere orthogonal zueinander angeordnet sind und ein funktionaler Zusammenhang im Anzeigebereich dargestellt ist, wobei der erste Zoombereich mit einer aktivierbaren ersten Zoomachse darstellbar ist, wobei die erste Zoomachse parallel zur Bereichsachse angeordnet ist, wobei bei aktivierter erster Zoomachse der funktionale Zusammenhang in Bezug auf die erste Zoomachse dargestellt wird, wobei durch das Aktivieren der ersten Zoomachse im Anzeigebereich statt der Bereichsachse die erste Zoomachse für die Darstellung im Anzeigenbereich verwendet wird, wodurch ein Vergrößern des ersten Zoombereichs der Bereichsachse erfolgt.

Somit kann eine Darstellung bereitgestellt werden, welche ein schnelles Umschalten und Analysieren von Bereichen ermöglicht. Dabei können insbesondere die Bereiche schon interessante Bereiche abgrenzen, so dass bei einem Aktivieren dieses Bereichs bereits eine entsprechende Vergrößerung stattfindet. So ist es nicht mehr nötig, von der Bereichsachse die Bereichsobergrenze und die Bereichsuntergrenze durch Verschieben oder Einstellen so einzurichten, dass eine Vergrößerung des dann darzustellenden Bereichs erfolgt, sondern es kann beispielsweise durch ein Aktivieren des Bereichs eine separate Achse bereitgestellt werden, welche dann mit der Darstellungsachse im Anzeigebereich einen vergrößerten Ausschnitt darstellt.

Somit lassen sich erhebliche Geschwindigkeitsvorteile gegenüber einer manuellen Einstellung realisieren.

### Folgendes Begriffliche sei erläutert:

Ein "Bildschirm" ist insbesondere ein Touchscreen, welcher einem Benutzer eine Anzeige vermittelt. Insbesondere weist der Bildschirm einzelne Pixel auf, welche separat ansteuerbar sind. Durch das unterschiedliche Ansteuern der einzelnen Pixel (Bildpunkte) kann einem Betrachter ein Bild vermittelt werden.

Über den zugeordneten "Rechner" können dem Bildschirm die darzustellenden Informationen, beispielweise in Form einer (Pixel-)Matrix, übergeben werden. Zudem kann der Rechner Eingabemittel wie beispielweise eine Maus oder eine Tastatur umfassen, so dass dann auf dem Bildschirm entsprechende Daten dargestellt werden.

Auch kann der Rechner so eingerichtet sein, dass Berührungen auf dem Touchscreen oder über eine Kamera aufgefasste Gesten zur Eingabe in den Rechner verwendet werden.

Die "Darstellungsachse" ist insbesondere eine Repräsentanz einer unabhängigen Variablen. Diese kann beispielweise beim Sonar die Zeit oder eine entsprechende Repräsentanz wie der Ort sein.

Die "Bereichsachse" dient insbesondere der Darstellung einer abhängigen Variablen. Durch das Zusammenspiel von unabhängigen Variablen und abhängigen Variablen kann ein funktionaler Zusammenhang auf dem Bildschirm dargestellt werden. Dieser funktionale Zusammenhang wird insbesondere in dem zwischen den die Bereichsachse und die Darstellungsachse eingeschlossenen "Anzeigebereich" dargestellt. Zudem können auch relationale Darstellungen erfolgen, bei denen zu einer unabhängigen Variablen zwei oder mehr abhängige Punkte existieren. Somit ist insbesondere in dem Anzeigenbereich ein Kurvenverlauf dargestellt. Auch anderweitige Graphen, Plots oder Bilder können in dem Anzeigebereich dargestellt werden.

Mit der "aktivierbaren ersten Zoomachse" kann parallel zur Bereichsachse auf eine Benutzeranweisung hin eine Achse bereitgestellt werden, deren Zoomobergrenze und Zoomuntergrenze im Wesentlichen an der gleichen (horizontalen oder vertikalen) Position angeordnet ist, wie die Bereichsuntergrenze und die Bereichsobergrenze der Bereichsachse.

Dadurch, dass im Anzeigebereich nun statt der Bereichsachse die erste Zoomachse für die Darstellung im Anzeigenbereich verwendet wird, erfolgt ein Vergrößern des ersten Zoombereichs der Bereichsachse.

Das "Aktivieren" kann beispielsweise durch einen Doppelklick via Maus oder einem Wischen oder einem Antippen bei einem Touchscreen erfolgen.

In einer weiteren Ausführungsform weist die Bereichsachse einen zweiten Zoombereich mit einer zweiten Zoomobergrenze und einer zweiten Zoomuntergrenze auf und der zweite Zoombereich ist mit einer aktivierbaren zweiten Zoomachse darstellbar, wobei die zweite Zoomachse parallel zur Bereichsachse angeordnet ist, so dass bei aktivierter zweiter Zoomachse insbesondere der funktionale Zusammenhang in Bezug auf die zweite Zoomachse dargestellt wird.

Somit kann insgesamt eine dritte Achse dargestellt werden, welche einen zweiten Zoombereich der Bereichsachse vergrößert im Anzeigenbereich darstellt. Diese zweite Zoomachse kann an derselben Position auftauchen, wie die erste Zoomachse oder eine dazu parallele Darstellung, so dass bei aktivierter erster und zweiter Zoomachse sowohl die Bereichsachse, als auch die erste Zoomachse, als auch die zweite Zoomachse dargestellt ist. Dabei können die beiden nicht dargestellten Achsen insbesondere etwas weniger Prominent dargestellt werden, so dass klar ist, welche der drei dargestellten Achsen mit welchen Bereichen derzeit im Anzeigebereich dargestellt wird.

Die Ausführungen zur zweiten Zoomachse gelten analog zu den Definitionen der ersten Zoomachse.

In einer weiteren Ausführungsform weist die Bereichsachse einen dritten Zoombereich mit einer dritten Zoomobergrenze und einer dritten Zoomuntergrenze oder weitere Zoombereiche mit jeweils einer Zoomobergrenze und einer Zoomuntergrenze auf und ist der dritte Zoombereich oder sind die weiteren Zoombereiche mit einer aktivierbaren dritten Zoomachse oder jeweils weiteren Zoomachsen darstellbar, wobei die dritte Zoomachse oder die weiteren Zoomachsen jeweils parallel zur Bereichsachse angeordnet ist oder sind, so dass bei aktivierter dritter Zoomachse oder einer der weiteren Zoomachsen insbesondere der funktionale Zusammenhang in Bezug auf die dritte Zoomachse oder die weiteren Zoomachsen dargestellt werden kann.

In dieser Ausführung sind die weiteren Zoomachsen lediglich eine konsequente Fortführung des Systems mit zwei Zoomachsen, wobei die Ausführung zur erster und zweiter Zoomachse und deren Zusammenspiel hier analog gelten.

Um ein dezidierteres Bild, insbesondere bei Sonaren zu erlangen, kann der Rechner eine Messsensorik aufweisen (oder dieser zugeordnet sein), und nach dem Aktivieren einer der Zoomachsen für den Zoombereich eine detailliertere Datenbestimmung erfolgen.

Somit können höhere Datenauflösungen, zum Beispiel eine feinere Auflösung der Tiefe bei einem Echolot, abhängig der Aktivierung der einzelnen Zoombereiche erfolgen. Somit entsteht eine Kopplung des Bildschirms und der entsprechenden Auswahl der Zoombereiche mit den Aktuatoren und entsprechenden Sensoren. Bei einem Sonar bedeutet dies insbesondere, dass die ausgesandten Unterwasserschallwellen via Hydrophon ausgesandten Unterwasserschallwellen, beispielsweise speziell für die Tiefe angepasst werden, oder dass die Sensoren (ebenfalls Hydrophone) lediglich in einem bestimmten Zeitfenster Signale empfangen.

Weiterhin kann es auch sein, dass für den Zoombereich zuerst eine Datenanalyse erfolgt und für die anderen Bereiche beispielsweise die Bestimmung der Daten zu einem späteren Zeitpunkt erfolgt. Für das Beispiel des Sonars würde das bedeuten, dass priorisierend der Zoombereich berechnet wird und erst anschließend die übrigen Daten aufbereitet und berechnet werden. Somit können nach einem Wechsel der Zoombereiche beispielsweise wieder - entsprechend der Bereichsachse - sämtliche Daten angezeigt werden.

In einer weiteren Ausführungsform ist der Bildschirm derart eingerichtet, dass ein Aktivieren einer der Zoombereiche durch ein Anklicken oder Antippen oder durch eine Gestensteuerung erfolgt und dadurch die entsprechende Zoomachse aktiviert ist.

Somit können einem Bediener komfortable oder alternative Bedienkonzepte zur Verfügung gestellt werden.

Um besonders komfortabel die einzelnen Zoombereiche oder Bereiche einzuschränken, kann der Bildschirm derart eingerichtet sein, dass ein Verschieben der Zoombereiche auf der Bereichsachse, ein Verschieben der Bereichsuntergrenze und/oder der Bereichsobergrenzen und/oder ein Verschieben der jeweiligen Zoomobergrenze und/oder Zoomuntergrenze im Anzeigebereich dargestellt wird.

So kann beispielsweise auf einem Touchscreen ein Zoombereich, der beispielsweise auf einer Bereichsachse in einem Bereich von 6.000 Tiefenmeter bis 6.500 Tiefenmeter angeordnet ist, mittels Berührung und vertikalem Verschieben nach oben auf einem Bereich von ebenfalls einer Bereichsweite von 500 m beispielsweise mit einen Startwert von 1.500 m verschoben werden, so dass der Bereich sich von 1.500 Tiefenmeter bis 2.000 Tiefenmeter erstreckt. Auch können beispielsweise die Bereichsober- und Untergrenze durch einfache Gestensteuerung beispielsweise mittels zweier gespreizter Finger, welche zusammengeführt werden, verkleinert werden. Dabei können sich beispielsweise die Zoombereiche linear anpassen und/oder ihre Bereichsweite jeweils beibehalten. Weiterhin kann beispielsweise ein Zoombereich aktiviert werden und bei der aktivierten Achse ebenfalls durch die gespreizten Finger der Bereich verengt oder durch das Spreizen zweier Finger aufgeweitet werden. Auch einzelnes Verschieben der Grenzen durch beispielsweise Antippen und vertikalem nach unten oder oben verschieben kann den Zoombereich einschränken.

Somit kann ein sehr effektives Bedienkonzept mit hoher Variationsmöglichkeit bereitgestellt werden.

Erfindungsgemäß wird die Aufgabe gelöst durch ein Sonar, insbesondere Echolot, welches einen Bildschirm nach einem der vorherigen Ausführungen aufweist.

Zudem kann die Aufgabe gelöst werden durch ein Wasserfahrzeug, insbesondere Schiff oder U-Boot, welches ein zuvor beschriebenes Sonar aufweist.

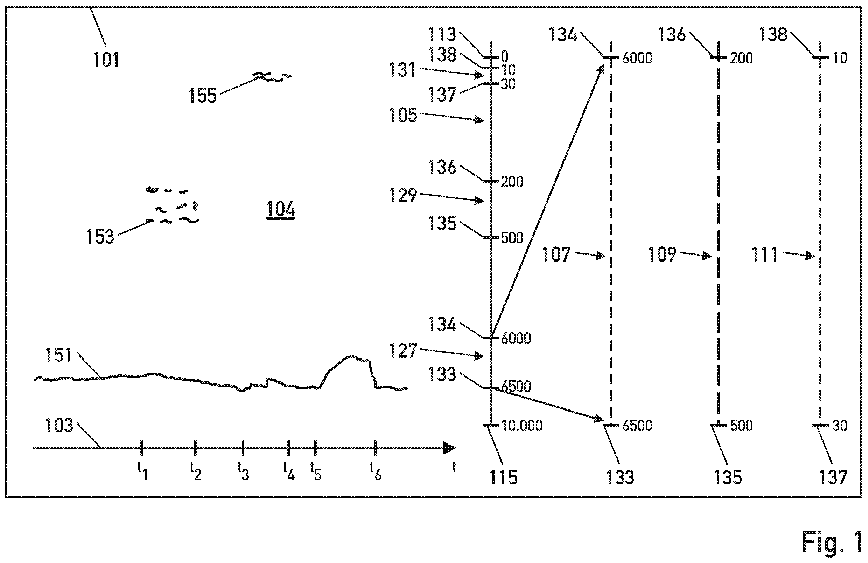

Im Weiteren wird die Erfindung anhand von Ausführungsbeispielen erläutert. Es zeigen
- Figur 1: eine schematische Darstellung eines Bildschirms eines Touchpads, welches an einen Echolot angeschlossen ist und
- Figur 2: eine schematische Darstellung des Bildschirms aus Figur 1 mit aktiviertem Zoombereich.

Der Tabletbildschirm 101 stellt eine Zeitachse 103 und eine dazu orthogonal angeordnete Tiefenachse 105 dar. In dem Anzeigebereich 104 werden abhängig von der Zeit t die Meerestiefen, welche mit einem Echolot gemessen werden, von 0 m bis 10.000 m dargestellt.

Auf der Tiefenachse 105 sind drei vordefinierte Bereiche 127, 129, 131 als Überwachungsbereiche angeordnet. Der erste Überwachungsbereich 127 hat eine erste Zoombereichsuntergrenze 133 bei 6.500 m und eine erste Bereichsobergrenze 134 bei 6.000 m, so dass sich eine Zoombereichsweite von 500 m ergibt.

Der zweite Überwachungsbereich 129 hat eine zweite Zoombereichsuntergrenze 135 bei 500 m und eine zweite Bereichsobergrenze 136 bei 200 m, so dass sich eine Zoombereichsweite von 300 m ergibt.

Der dritte Überwachungsbereich 131 hat eine dritte Zoombereichsuntergrenze 137 bei 10 m und eine dritte Bereichsobergrenze 138 bei 30 m, so dass sich eine Zoombereichsweite von 20 m ergibt.

Der Tabletbildschirm 101 ist mit einem Echolot eines Schiffs verbunden, welches an der Wasseroberfläche fährt. Dabei zeichnet das Echolot über die gesamte Zeit Detektionssignale oberhalb des Meeresbodens 151 auf.

Zwischen dem Zeitpunkt t1 und t2 hat es in dem zweiten Überwachungsbereich 129 einen Fischschwarm 153 detektiert. Weiterhin wurde im Zeitbereich t3 bis t4 ein Algenteppich 155 detektiert.

Werden nun in die einzelnen Überwachungsbereiche 127, 129, 131 durch Doppelantippen der Bereiche auf der Tiefenachse 105 aktiviert, so erscheinen die drei zusätzlichen Achsen 107, 109 und 111 mit den jeweiligen Zoombereichsunter- und Zoombereichsobergrenzen 133, 134, 135, 136, 137, 138.

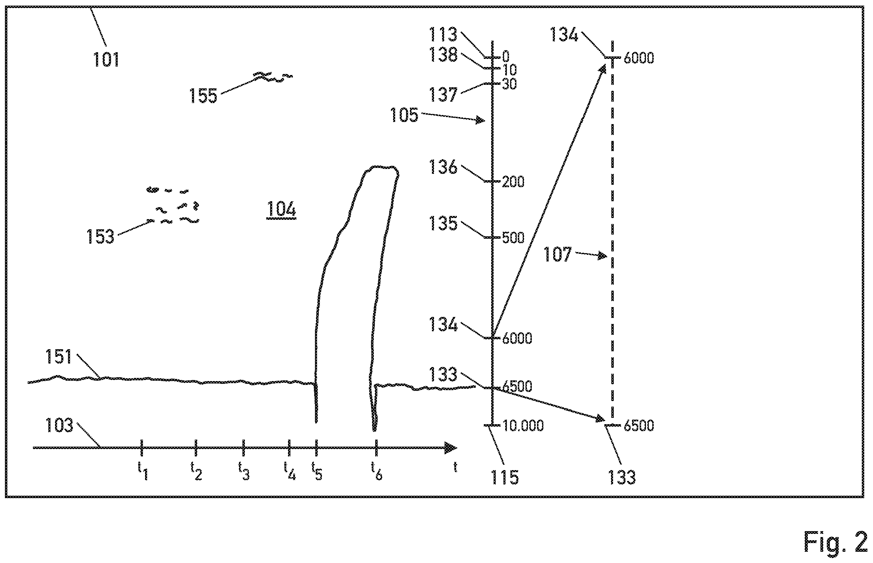

Vorliegend sei während des Zeitintervalls zwischen t5 und t6 der erste Überwachungsbereich 127 durch ein Doppelantippen des Überwachungsbereichs auf der Tiefenachse 105 aktiviert (siehe Fig. 2). Dabei haben sich nun die beiden übrigen Zoombereichsachsen 109 und 111 ausgeblendet und die Bereichsachse wird grau hinterlegt dargestellt (nicht dargestellt).

Im Zeitintervall zwischen t5 und t6 wird eine Erhebung am Meeresboden 151 mittels des Echolots ermittelt und auf dem Tabletbildschirm 101 darstellt.

Durch das Aktivieren des Bereichs werden lediglich Echolotdaten für den Bereich zwischen 6.000m und 6.500m ermittelt. Zudem umfasst nun der Anzeigebereich 104 fast den gesamten Bereich zwischen 6.000m und 6.500m, sodass die Erhebung des Meeresgrundes 151 detaillierter dargestellt wird.

Durch ein Antippen der Tiefenachse 105, werden die Achsen 107, 109, 111 grau hinterlegt dargestellt und die Tiefenachse gelangt in den Bildschirmvordergrund. Zudem erfolgt die Auswertung der Daten des Echolots wieder für den Bereich zwischen 0m und 10.000m.

### Bezugszeichenliste

101 Tabletbildschirm
103 Zeitachse
104 Anzeigebereich
105 Tiefenachse
107 erster Überwachungsbereich
109 zweiter Überwachungsbereich
111 dritter Überwachungsbereich
113 Bereichsobergrenze
115 Bereichsuntergrenze
127 erster Überwachungsbereich
129 zweiter Überwachungsbereich
131 dritter Überwachungsbereich
133 erste Zoombereichsuntergrenze
134 erste Zoombereichsobergrenzen
135 zweite Zoombereichsuntergrenze
136 zweite Zoombereichsobergrenzen
137 dritte Zoombereichsuntergrenze
138 dritte Zoombereichsobergrenzen
151 Meeresboden
153 Fischschwarm
155 Algenteppich

## Patentansprüche

1. Sonar aufweisend einen Bildschirm (101) mit einem zugeordneten Rechner,
wobei der Rechner Eingabemittel umfasst; und/oder
wobei der Bildschirm ein Touchscreen ist, wobei der Rechner eingerichtet ist, Berührungen auf dem Touchscreen zur Eingabe in den Rechner zu verwenden; und/oder
wobei der Rechner eingerichtet ist, über eine Kamera aufgefasste Gesten zur Eingabe in den Rechner zu verwenden;
wobei der Bildschirm eine Anzeige vermittelt und wobei der zugeordnete Rechner dem Bildschirm die darzustellenden Informationen übergibt,
wobei eine Darstellungsachse (103) und eine Bereichsachse (105) auf dem Bildschirm darstellbar sind, wobei die Bereichsachse eine Bereichsuntergrenze (115), eine Bereichsobergrenze (113) und einen ersten Zoombereich (127) mit einer ersten Zoomobergrenze (134) und einer ersten Zoomuntergrenze (133) umfasst, wobei die Bereichsachse und die Darstellungsachse einen eingeschlossenen Anzeigebereich (104) bilden und ein funktionaler Zusammenhang im Anzeigebereich darstellbar ist, wobei der erste Zoombereich mit einer aktivierbaren ersten Zoomachse (107) darstellbar ist, wobei die erste Zoomachse parallel zur Bereichsachse angeordnet ist, wobei bei aktivierter erster Zoomachse der funktionale Zusammenhang in Bezug auf die erste Zoomachse dargestellt wird, **dadurch gekennzeichnet, dass** durch das Aktivieren der ersten Zoomachse im Anzeigebereich statt der Bereichsachse die erste Zoomachse mit der Darstellungsachse für die Darstellung im Anzeigenbereich verwendet wird, wodurch ein Vergrößern des ersten Zoombereichs der Bereichsachse erfolgt.

2. Sonar nach Anspruch 1, **dadurch gekennzeichnet, dass** die Bereichsachse einen zweiten Zoombereich (129) mit einer zweiten Zoomobergrenze (136) und einer zweiten Zoomuntergrenze (135) aufweist und der zweite Zoombereich mit einer aktivierbaren zweiten Zoomachse (109) darstellbar ist, wobei die zweite Zoomachse parallel zur Bereichsachse angeordnet ist, wobei bei aktivierter zweiter Zoomachse insbesondere der funktionale Zusammenhang in Bezug auf die zweite Zoomachse dargestellt wird.

3. Sonar nach einem der vorherigen Ansprüche, **dadurch gekennzeichnet, dass** die Bereichsachse einen dritten Zoombereich (131) mit einer dritten Zoomobergrenze (137) und einer dritten Zoomuntergrenze (138) oder weitere Zoombereiche mit jeweils einer Zoomobergrenze und einer Zoomuntergrenze aufweist und der dritte Zoombereich oder die weiteren Zoombereiche mit einer aktivierbaren dritten Zoomachse (111) oder jeweils weitere Zoomachsen darstellbar ist, wobei die dritte Zoomachse oder die weiteren Zoomachsen jeweils parallel zur Bereichsachse angeordnet ist oder sind, wobei bei aktivierter dritter Zoomachse oder einer der weiteren Zoomachsen insbesondere der funktionale Zusammenhang in Bezug auf die dritte Zoomachse oder die weiteren Zoomachsen dargestellt wird.

4. Sonar nach einem der vorherigen Ansprüche, **dadurch gekennzeichnet, dass** der Rechner eine Messsensorik aufweist und nach dem Aktivieren einer der Zoomachsen für den Zoombereich eine detailliertere Datenbestimmung durch die Messsensorik in Abhängigkeit der Aktivierung der ersten Zoomachse erfolgt, um eine Kopplung des Bildschirms und des ersten Zoombereichs mit der Messsensorik zu erhalten.

5. Sonar nach einem der vorherigen Ansprüche, **dadurch gekennzeichnet, dass** der Bildschirm eingerichtet ist, durch ein Anklicken oder Antippen oder durch eine Gestensteuerung einen der Zoombereiche zu aktivieren und dadurch die entsprechende Zoomachse aktiviert ist.

6. Sonar nach einem der vorherigen Ansprüche, **dadurch gekennzeichnet, dass** der Bildschirm derart eingerichtet ist, ein Verschieben der Zoombereiche auf der Bereichsachse, ein Verschieben der Bereichsuntergrenze und/oder der Bereichsobergrenze und/oder ein Verschieben der jeweiligen Zoomobergrenze und/oder Zoomuntergrenze im Anzeigebereich darzustellen.

7. Wasserfahrzeug, insbesondere Schiff oder U-Boot, welches ein Sonar nach einem der vorherigen Ansprüche aufweist.

## Claims

1. A sonar comprising a screen (101) with an associated computer,
the computer comprising input means; and/or
wherein the screen is a touchscreen, the computer being arranged to use touches on the touchscreen for input to the computer; and/or
wherein the computer is arranged to use gestures sensed via a camera for input to the computer;
wherein the screen conveys a display and wherein the associated computer conveys to the display the information to be displayed, wherein a display axis (103) and a range axis (105) are displayable on the display, wherein the range axis comprises a range lower limit (115), a range upper limit (113) and a first zoom range (127) with a first zoom upper limit (134) and a first zoom lower limit (133), wherein the range axis and the display axis form an enclosed display range (104) and a functional relationship is displayable in the display range, wherein the first zoom range is displayable with an activatable first zoom axis (107), wherein the first zoom axis is arranged parallel to the range axis, wherein when the first zoom axis is activated, the functional relationship is represented with respect to the first zoom axis, **characterized in that** by activating the first zoom axis in the display area, the first zoom axis is used with the display axis for the representation in the display area instead of the range axis, thereby increasing the first zoom range of the range axis.

2. Sonar according to claim 1, **characterized in that** the range axis has a second zoom range (129) with a second zoom upper limit (136) and a second zoom lower limit (135) and the second zoom range can be displayed with an activatable second zoom axis (109), the second zoom axis being arranged parallel to the range axis, wherein, when the second zoom axis is activated, in particular the functional relationship is displayed with respect to the second zoom axis.

3. Sonar according to one of the previous claims, **characterized in that** the range axis has a third zoom range (131) with a third upper zoom limit (137) and a third lower zoom limit (138) or further zoom ranges each with an upper zoom limit and a lower zoom limit, and the third zoom range or the further zoom ranges can be represented with an activatable third zoom axis (111) or in each case further zoom axes, wherein the third zoom axis or the further zoom axes is or are in each case arranged parallel to the range axis, wherein, when the third zoom axis or one of the further zoom axes is activated, in particular the functional relationship is represented with respect to the third zoom axis or the further zoom axes.

4. Sonar according to any one of the preceding claims, **characterized in that** the computer comprises a measurement sensor system and, after activating one of the zoom axes for the zoom area, a more detailed data determination is performed by the measurement sensor system in dependence on the activation of the first zoom axis in order to obtain a coupling of the screen and the first zoom area with the measurement sensor system.

5. Sonar according to any one of the preceding claims, **characterized in that** the screen is arranged to activate one of the zoom areas by a click or tap or by a gesture control and thereby the corresponding zoom axis is activated.

6. Sonar according to any one of the preceding claims, **characterised in that** the display screen is arranged to display a shift of the zoom ranges on the range axis, a shift of the range lower limit and/or the range upper limit and/or a shift of the respective zoom upper limit and/or zoom lower limit in the display range.

7. Watercraft, in particular ship or submarine, which has a sonar according to one of the previous claims.

## Revendications

1. Sonar comprenant un écran (101) avec un ordinateur associé,
l'ordinateur comprenant des moyens d'entrée ; et/ou
l'écran étant un écran tactile, l'ordinateur étant agencé pour utiliser des contacts tactiles sur l'écran tactile pour l'entrée dans l'ordinateur ; et/ou
l'ordinateur étant conçu pour utiliser des gestes captés par une caméra pour l'entrée dans l'ordinateur ;
dans lequel l'écran communique un affichage et dans lequel l'ordinateur associé transmet à l'écran les informations à afficher, dans lequel un axe de représentation (103) et un axe de zone (105) peuvent être affichés sur l'écran, dans lequel l'axe de zone comprend une limite inférieure de zone (115), une limite supérieure de zone (113) et une première zone de zoom (127) avec une première limite supérieure de zoom (134) et une première limite inférieure de zoom (133), l'axe de zone et l'axe de représentation formant une zone d'affichage (104) incluse et une relation fonctionnelle pouvant être représentée dans la zone d'affichage, la première zone de zoom pouvant être représentée avec un premier axe de zoom (107) activable, le premier axe de zoom étant disposé parallèlement à l'axe de zone, dans lequel, lorsque le premier axe de zoom est activé, la relation fonctionnelle est représentée par rapport au premier axe de zoom, **caractérisé en ce que** l'activation du premier axe de zoom dans la zone d'affichage permet d'utiliser le premier axe de zoom avec l'axe de représentation pour la représentation dans la zone d'affichage au lieu de l'axe de zone, ce qui permet d'agrandir la première plage de zoom de l'axe de zone.

2. Sonar selon la revendication 1, **caractérisé en ce que** l'axe de zone présente une deuxième zone de zoom (129) avec une deuxième limite supérieure de zoom (136) et une deuxième limite inférieure de zoom (135) et la deuxième zone de zoom peut être représentée avec un deuxième axe de zoom (109) activable, le deuxième axe de zoom étant disposé parallèlement à l'axe de zone, la relation fonctionnelle étant représentée en particulier par rapport au deuxième axe de zoom lorsque le deuxième axe de zoom est activé.

3. Sonar selon l'une des revendications précédentes, **caractérisé en ce que** l'axe de zone présente une troisième zone de zoom (131) avec une troisième limite supérieure de zoom (137) et une troisième limite inférieure de zoom (138) ou d'autres zones de zoom avec respectivement une limite supérieure de zoom et une limite inférieure de zoom et la troisième zone de zoom ou les autres zones de zoom peuvent être représentées avec un troisième axe de zoom activable (111) ou respectivement d'autres axes de zoom, le troisième axe de zoom ou les autres axes de zoom étant respectivement disposés parallèlement à l'axe de la zone, la relation fonctionnelle par rapport au troisième axe de zoom ou aux autres axes de zoom étant notamment représentée lorsque le troisième axe de zoom ou l'un des autres axes de zoom est activé.

4. Sonar selon l'une quelconque des revendications précédentes, **caractérisé en ce que** le calculateur comporte un ensemble de capteurs de mesure et **en ce que**, après activation de l'un des axes de zoom pour la zone de zoom, une détermination plus détaillée des données est effectuée par l'ensemble de capteurs de mesure en fonction de l'activation du premier axe de zoom, afin d'obtenir un couplage de l'écran et de la première zone de zoom avec l'ensemble de capteurs de mesure.

5. Sonar selon l'une des revendications précédentes, **caractérisé en ce que** l'écran est agencé pour activer l'une des zones de zoom par un clic ou un tapotement ou par une commande gestuelle, ce qui active l'axe de zoom correspondant.

6. Sonar selon l'une des revendications précédentes, **caractérisé en ce que** l'écran est agencé de manière à représenter un déplacement des zones de zoom sur l'axe de zone, un déplacement de la limite inférieure de zone et/ou de la limite supérieure de zone et/ou un déplacement de la limite supérieure de zoom et/ou de la limite inférieure de zoom respective dans la zone d'affichage.

7. Véhicule aquatique, notamment navire ou sous-marin, comportant un sonar selon l'une des revendications précédentes.
